# DEMANDE DE BREVET EUROPEEN

(11) **EP 1 059 710 A1**
(43) Date de publication de la demande: **13.12.2000**
(21) Numéro de dépôt: 00401571.5
(22) Date de dépôt: 05.06.2000
(51) Int. Cl.: H01S 3/30, H04B 10/17

(54) **Amplificateur raman hybride**

(30) Priorité: 10.06.1999 FR 9907323
(71) Demandeur: ALCATEL, 75008 Paris (FR)
(72) Inventeur: Bayart, Dominique, 92140 Clamart (FR)
(74) Mandataire: Lamoureux, Bernard

(57) **Abrégé**

L'invention propose un répéteur ou récepteur (2) d'un système de transmission par fibre optique, comprenant un amplificateur discret par effet Raman stimulé (5), dont la lumière de pompe résiduelle est transmise à un des ports du répéteur ou récepteur.

Elle permet ainsi d'utiliser pour une pré-amplification distribuée dans la fibre de ligne la puissance de pompe qui n'a pas été utilisée dans l'amplificateur discret.

## Description

La présente invention concerne le domaine des transmissions par fibres optiques, et notamment les systèmes de transmission à multiplexage en longueur d'onde (en anglais "wavelength division multiplexing ou WDM).

Une des solutions connues pour la transmission de signaux dans des fibres optiques consiste à disposer à intervalles réguliers le long du système de transmission des amplificateurs optiques, et notamment des amplificateurs à fibre optique dopée à l'erbium. Une telle solution est par exemple décrite dans Bergano, Long haul WDM transmission using optimum channel modulation : 32 x 5 Gbit/s 9300 km demonstration, OFC'97 post deadline 16. Les distances de transmission dans un tel système sont limitées par le rapport signal sur bruit, et notamment par la présence de bruit d'amplification spontanée (ASE, acronyme de l'anglais "amplification spontaneous noise") généré dans les amplificateurs.

Il a aussi été proposé dans un article Morten Nissov et autres, 100 Gb/s (10x10 Gb/s) WDM transmission over 7200 km using distribution Raman amplification, OFC'97, post deadline paper, d'utiliser dans un système de transmission uniquement une amplification distribuée par effet Raman stimulé (SRS, acronyme de l'anglais "Stimulated Raman Scattering") pour l'amplification à intervalles réguliers du signal. Cette solution permet une amélioration du rapport signal sur bruit d'environ 2 dB par rapport à une solution comparable utilisant uniquement des pompes discrètes. Une description de l'effet Raman stimulé est donnée dans l'ouvrage de G.P. Agrawal, Nonlinear Fibre Optics, Academic Press 1980.

J. Kani et autres, Fiber Raman amplifier for 1520 nm band WDM transmission, Electronic Letter, vol. 34 no. 18 pp. 1745, Sept. 98, décrit un amplificateur discret par effet Raman; l'amplificateur présente un isolateur au delà de la fibre d'amplification dans le sens de propagation de la pompe. Une telle amplification discrète par effet Raman stimulé demande des puissances de pompe importantes. La pompe utilisé dans l'article de J. Kani et autres présente une puissance de 750 mW.

La demande de brevet français déposée le 06.07.98 sous le numéro 98 08625 et intitulée Amplification quasi-distribuée dans un systèmes de transmission à fibre optique à signaux solitons propose dans un mode de réalisation d'utiliser une pompe à la fois pour le pompage d'une section de fibre dopée à l'erbium et pour le pompage de la fibre de ligne. Dans cette configuration, le signal de pompe est co-propagatif.

L'invention propose une solution au problème de la puissance des amplificateurs discrets à effet Raman stimulé; elle permet une meilleure utilisation de la puissance des pompes de tels amplificateurs, sans nécessiter de modifications en dehors des répéteurs ou du récepteur du système de transmission.

Plus précisément, l'invention propose un répéteur ou récepteur pour système de transmission par fibre optique, comprenant un amplificateur discret par effet Raman stimulé, dont la lumière de pompe résiduelle est transmise dans le sens contra-propragatif à un port d'entrée du répéteur ou récepteur.

Dans un premier mode de réalisation, le répéteur ou récepteur comprend en amont de l'amplificateur discret dans le sens de propagation deux multiplexeurs définissant deux branches, l'une branche contenant un isolateur et l'autre branche permettant le passage de la lumière de pompe résiduelle.

Dans un deuxième mode de réalisation, le répéteur ou récepteur comprend en amont de l'amplificateur discret dans le sens de propagation un circulateur et un multiplexeur définissant deux branches, l'une branche permettant le passage des signaux et l'autre branche permettant le passage de la lumière de pompe résiduelle.

Dans un troisième mode de réalisation, le répéteur ou récepteur comprend en amont de l'amplificateur discret dans le sens de propagation un circulateur présentant trois ports, le premier port étant relié à l'amplificateur discret, le second port étant relié à un réflecteur sélectif réfléchissant la lumière de pompe, et le troisième port étant relié au dit port du répéteur.

Dans ce cas, le réflecteur sélectif est de préférence constitué d'un réseau de Bragg.

L'invention propose aussi un système de transmission à fibre optique, comprenant au moins un tel répéteur ou récepteur.

D'autres caractéristiques et avantages de l'invention apparaîtront à la lecture de la description qui suit de modes de réalisation de l'invention, donnée à titre d'exemple et en référence aux dessins annexés, dont les dessins montrent
- figure 1, une représentation schématique d'un répéteur selon un premier mode de réalisation de l'invention;
- figure 2, une représentation schématique d'un répéteur selon un deuxième mode de réalisation de l'invention;
- figure 3, une représentation schématique d'un répéteur selon un troisième mode de réalisation de l'invention.

Dans la suite de la présente description, on utilise les termes d'amplification discrète et d'amplification distribuée; ces termes sont clairs et sans équivoque pour l'homme du métier. On entend par amplification discrète une amplification dans une fibre qui n'est pas la fibre de ligne, mais est formée d'une bobine ou autre située dans un répéteur ou dans un boîtier quelconque. On entend au contraire par amplification distribuée une amplification dans la fibre de ligne, c'est-à-dire dans une fibre qui s'étend entre des répéteurs, ou qui à tout le moins s'étend le long du système de transmission.

On utilise dans la suite les termes amont et aval au regard du sens de propagation du signal dans le répéteur, soit sur toutes les figures de gauche à droite.

L'invention repose sur la constatation que les puissances de pompe utilisées pour l'amplification Raman discrète sont importantes, et que la puissance de pompe résiduelle après l'amplification discrète peut être utilisée à d'autres fins, et notamment pour une amplification distribuée. Les figures montrent différents modes de réalisation de répéteurs avec un amplificateur discret par effet Raman stimulé, dans lesquels la lumière de pompe résiduelle est transmise vers un port d'entrée du répéteur, de sorte à pouvoir être utilisée pour une amplification distribuée.

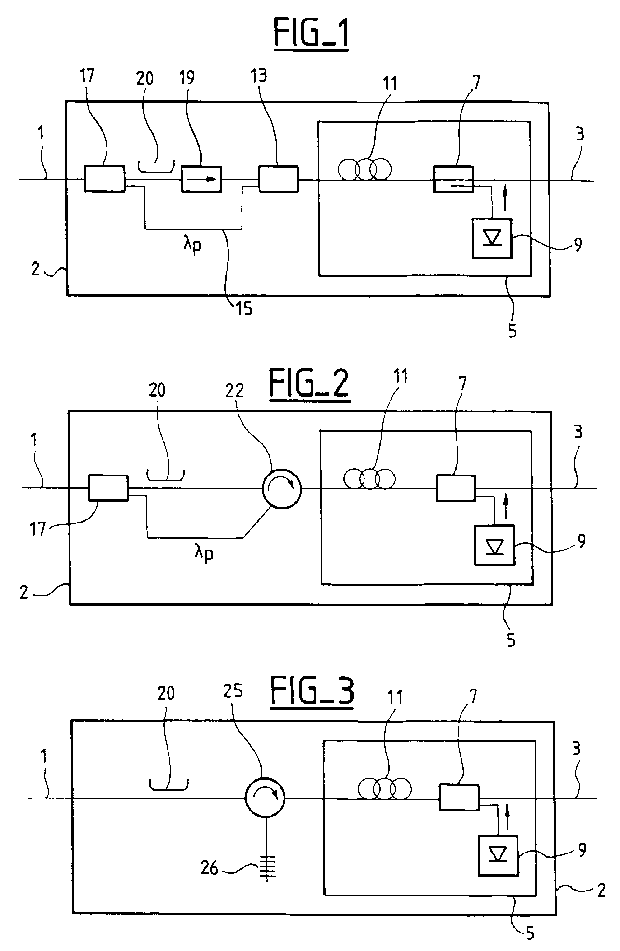

La figure 1 montre un premier mode de réalisation d'un répéteur selon l'invention. Dans le sens de propagation du signal, de gauche à droite sur la figure, sont représentés la fibre de ligne 1, en amont du répéteur 2, et la fibre de ligne 3 en aval de celui-ci. Le répéteur comprend un amplificateur discret par effet Raman stimulé 5, avec une lumière de pompe contra-propagative; dans le sens inverse de la propagation du signal, l'amplificateur discret présente un coupleur 7 pour le couplage dans la fibre de la lumière provenant d'une pompe 9, typiquement une pompe formée d'un laser à semi-conducteur ou d'un laser à fibre d'une puissance de l'ordre de 500 mW à 1 W. La longueur d'onde λₚ de la pompe peut être entre 1450 et 1500 nm pour des signaux transmis autour de 1550 nm.

L'amplificateur discret comprend en outre une fibre d'amplification 1 1, pour l'amplification par effet Raman stimulé des signaux à l'aide de la lumière de pompe. On peut utiliser une fibre adaptée à l'amplification Raman avec une section effective faible, de l'ordre de 30 à 50 µm², ce qui a pour effet d'améliorer le rendement de l'amplification par effet Raman stimulé.

Comme indiqué plus haut, la puissance de la lumière de pompe résiduelle, i. e. la puissance de la lumière de pompe en amont de la fibre d'amplification 11 reste importante; l'invention propose de transmettre cette lumière résiduelle vers un port d'entrée du répéteur.

Le répéteur de la figure 1 comprend donc, dans le sens inverse du sens de propagation du signal, et en amont de l'amplificateur discret, un premier multiplexeur 13, qui sépare la lumière de pompe du reste de la lumière. La lumière de pompe à la longueur d'onde λₚ est transmise sur une première branche 15, vers un deuxième multiplexeur 17. Le reste de la lumière, et notamment la lumière aux longueurs d'onde voisines des longueurs d'ondes des signaux transmis, est envoyé par le premier multiplexeur dans une seconde branche; celle-ci peut notamment comprendre, comme dans l'exemple de la figure 1, un isolateur 19, et un coupleur 20 pour le prélèvement du signal entrant, ou encore tout dispositif actif ou passif sans rapport avec la présente invention.

Le deuxième multiplexeur 17 reçoit les lumières des deux branches, et les transmet vers le port d'entrée du répéteur.

De la sorte, les deux multiplexeurs 13 et 17, avec la branche 15, permettent de transmettre vers un port d'entrée du répéteur la lumière résiduelle de la pompe de l'amplificateur discret; cette lumière résiduelle peut alors être utilisée pour une pré-amplification discrète dans la fibre de ligne 1, et par exemple pour une pré-amplification par effet Raman stimulé dans la fibre de ligne.

La figure 2 montre un autre mode de réalisation de l'invention; le montage de la figure 2 est analogue à celui de la figure 1, à cela près que le premier multiplexeur 13 et l'isolateur 19 sont remplacés par un circulateur 22. Le circulateur 22 présente trois ports; le premier port est relié au côté amont de l'amplificateur discret; le deuxième port est relié à la première branche 15, et le troisième port est relié au coupleur 20 de la deuxième branche. De la sorte, les signaux traversent le répéteur en passant par la deuxième branche, le circulateur depuis son troisième port vers son premier port et l'amplificateur discret. Dans le sens inverse du sens de propagation, la lumière résiduelle passe du premier port du circulateur vers le deuxième port, et la lumière de pompe résiduelle est envoyée par le multiplexeur 17 vers un port d'entrée du répéteur.

Le mode de réalisation de la figure 2 présente l'avantage que l'ensemble formé du multiplexeur et du circulateur sert d'isolateur, sans qu'il ne soit donc utile de prévoir un isolateur distinct.

La figure 3 montre encore un mode de réalisation de l'invention. Le mode de réalisation de la figure 3 est identique à celui des figures 1 et 2, en ce qui concerne l'amplificateur discret. Toutefois, au lieu d'utiliser des multiplexeurs, le mode de réalisation de la figure 3 emploie un circulateur et un réflecteur sélectif. Plus exactement, le répéteur de la figure 3 comprend, dans le sens contraire de la propagation du signal et en partant du port amont de l'amplificateur discret, un circulateur 25, avec trois ports. Le premier port du circulateur est relié au port amont de l'amplificateur discret. Le deuxième port du circulateur est relié à un réflecteur sélectif, en l'espèce un réseau de Bragg 26 qui réfléchit la lumière autour de la longueur d'onde λₚ de la pompe. Le troisième port du circulateur est relié au port d'entrée ou port amont du répéteur, par l'intermédiaire d'un coupleur 20 qui permet comme dans le mode de réalisation de la figure 1 de prélever le signal d'entrée.

La lumière de pompe résiduelle provenant de l'amplificateur discret arrive sur le premier port du circulateur, est transmise vers le second port, est réfléchie par le réflecteur sélectif, entre dans le circulateur par le second port, et sort du circulateur par le troisième port pour être transmise vers le port amont du répéteur. Les signaux transmis entrent dans le répéteur, pénètrent dans le circulateur par le troisième port, et en ressortent par le premier port, de sorte à être transmis à l'amplificateur discret.

Dans les trois modes de réalisation de l'invention, la lumière de pompe résiduelle est transmise vers un port d'entrée du récepteur. Cette lumière peut alors servir pour une amplification distribuée des signaux transmis sur la fibre de ligne 1.

L'invention a été décrite en référence à des répéteurs d'un système de transmission à fibre ; elle s'applique toutefois aussi à des systèmes de transmission sans répéteurs, les structures des figures 1 à 3 constituant simplement des récepteurs.

## Revendications

1. Un répéteur ou récepteur (2) d'un système de transmission par fibre optique, comprenant un amplificateur discret par effet Raman stimulé (5), dont la lumière de pompe résiduelle est transmise dans le sens contra-propagatif à un port d'entrée du répéteur ou récepteur.

2. Le répéteur ou récepteur selon la revendication 1, caractérisé en ce qu'il comprend en amont de l'amplificateur discret (5) dans le sens de propagation deux multiplexeurs (13, 17) définissant deux branches, l'une branche contenant un isolateur (19) et l'autre branche (15) permettant le passage de la lumière de pompe résiduelle.

3. Le répéteur ou récepteur selon la revendication 1, caractérisé en ce qu'il comprend en amont de l'amplificateur discret (5) dans le sens de propagation un circulateur (22) et un multiplexeur (17) définissant deux branches, l'une branche permettant le passage des signaux et l'autre branche (15) permettant le passage de la lumière de pompe résiduelle.

4. Le répéteur ou récepteur selon la revendication 1, caractérisé en ce qu'il comprend en amont de l'amplificateur discret (5) dans le sens de propagation un circulateur (25) présentant trois ports, le premier port étant relié à l'amplificateur discret, le second port étant relié à un réflecteur sélectif (26) réfléchissant la lumière de pompe, et le troisième port étant relié au dit port du répéteur.

5. Le répéteur ou récepteur selon la revendication 4, caractérisé en ce que le réflecteur sélectif est constitué d'un réseau de Bragg.

6. Un système de transmission à fibre optique, comprenant au moins un répéteur ou récepteur selon l'une des revendications 1 à 5.
